# EUROPÄISCHE PATENTSCHRIFT

(11) **EP 0 439 741 B1**
(45) Veröffentlichungstag und Bekanntmachung des Hinweises auf die Patenterteilung: **08.03.1995**
(21) Anmeldenummer: 90123513.5
(22) Anmeldetag: 07.12.1990
(51) Int. Cl.: B65G 47/90, B25J 19/02

(54) **Manipulator**
Manipulator
Manipulateur

(30) Priorität: 01.02.1990 CH 320/90
(43) Veröffentlichungstag der Anmeldung: 07.08.1991
(73) Patentinhaber: SIG-Schweizerische Industrie-Gesellschaft, CH-8212 Neuhausen am Rheinfall (CH)
(72) Erfinder: Büchi, Felix, CH-8114 Dänikon (CH); Huber, Roman, CH-8966 Lieli (CH); Lang, Toni, CH-5015 Erlinsbach (CH)
(74) Vertreter: Frei, Alexandra Sarah

(56) Entgegenhaltungen:
- EP-A- 0 117 665
- DE-A- 3 311 079
- DE-A- 3 333 301
- FR-A- 2 576 005
- CHIP ZEITSCHRIFT FUER MIKROCOMPUTER-TECHNIK. no. 12, Dezember 1983, WURZBURG DE, Seiten 316 - 320; H.B.: "Wie intelligente Roboter arbeiten"

## Beschreibung

Die Erfindung betrifft ein Verfahren und eine Vorrichtung zum Manipulieren von Gegenständen, die auf einer Fläche an einen ersten Ort herangeführt werden, wobei die Position der Gegenstände am ersten Ort berührungslos erfasst wird.

Bei solchen bekannten Verfahren werden einzelne Gegenstände jeweils einzeln erfasst und von einem ersten Ort an einen zweiten Ort bewegt. Dabei wird die Position des Gegenstandes am ersten Ort durch ein System erfasst und von diesem an einen Manipulator weitergegeben, der damit in die Lage versetzt ist, den Gegenstand zu ergreifen. Dann wird der Gegenstand an den zweiten Ort bewegt. Das bedeutet, dass für jeden Gegenstand die Position zuerst erfasst wird, dass er anschliessend ergriffen und sofort an den neuen Ort bewegt wird. Jeder Gegenstand wird damit einzeln transportiert. Solche bekannte Vorrichtungen bestehen beispielsweise aus einem Manipulator, der mit einem Greifer versehen ist, mit dem der Manipulator Gegenstände ergreifen und von einem Ort an einen anderen Ort überführen kann. Der erste Ort liegt typischerweise auf einem Förderband. Somit liegen die Gegenstände auf dem Förderband, von wo sie ergriffen werden. Ihre Position auf dem Förderband wird durch ein System erfasst, das diese Position optisch feststellt und die Gegenstände von der Seite des Förderbandes her betrachtet, von der auch der Greifer die Gegenstände erfasst.

Eine solche Vorrichtung ist beispielsweise aus "CHIP" Zeitschrift für Mikrocomputertechnik No. 12, Dezember 1983, Seiten 316 - 320 bekannt. Dabei wird ein Gegenstand vor dem Ergreifen durch einen Manipulator zuerst auf einen drehbaren Tisch geführt, wo er gedreht werden kann, so dass das System den Gegenstand genau identifizieren kann.

Ein Nachteil dieses bekannten Systems liegt darin, dass der Gegenstand aus seiner ursprünglichen Bewegung, durch die er an den Manipulator herangeführt wird, abgebremst und stillgesetzt werden muss, um genau identifiziert und durch den Manipulator aus dem Stillstand ergriffen zu werden.

Bei solchen Verfahren und Vorrichtungen wird die Zeit, die für die Abwicklung eines Bewegungszyklus benötigt wird, in dem Sinne beschränkt, als gewisse Zeiten nicht unterschritten werden können. Dies ergibt sich aus dem Umstand, dass die Position eines zu ergreifenden Gegenstandes zuerst erfasst sein soll, bevor der Greifer zugreift und insbesondere weil der Greifer beim Zugreifen, die Position des Gegenstandes gegenüber dem System zum Erfassen der Position verdeckt. Deshalb kann der Greifer erst dann an den Gegenstand herangeführt werden, wenn die Position erfasst ist. Falls der Gegenstand bewegt ist, muss das System auch die Bewegung, beispielsweise des Förderbandes besonders berücksichtigen, denn, nachdem die Position des Gegenstandes erfasst ist, bewegt sich dieser weiter bis zum Zeitpunkt zu dem er vom Greifer ergriffen wird. Tut es das nicht, so darf das Förderband sich nur sehr langsam bewegen.

Die Erfindung, wie sie in den Ansprüchen gekennzeichnet ist, löst die Aufgabe, ein Verfahren und eine Vorrichtung zum Manipulieren von Gegenständen zu schaffen, bei denen die Zeiten zum Manipulieren oder Ueberführen von Gegenständen wesentlich verkürzt sind, ohne dass die Bewegungen entsprechend schneller ablaufen.

Die durch die Erfindung erreichten Vorteile sind im wesentlichen darin zu sehen, dass die Leistung des Manipulators gesteigert werden kann, ohne diejenigen Nachteile hinnehmen zu müssen, die bei entsprechend schnelleren Bewegungen üblich sind.

Im folgenden wird die Erfindung anhand von einer einen Ausfuehrungsweg darstellenden Zeichnung naeher erlaeutert. Es zeigt:

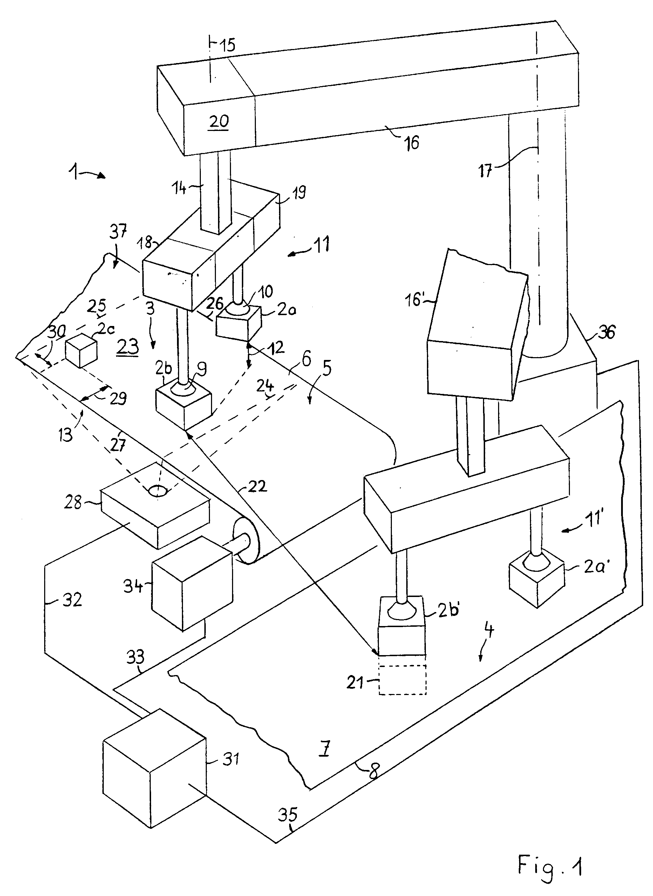

Figur 1 eine perspektivische Darstellung der erfindungsgemaessen Vorrichtung,
Figur 1 zeigt einen Manipulator 1 zum Ueberfuehren von Gegenstaenden 2a, 2b, 2c von einem ersten Ort 3 an einen zweiten Ort 4. Der erste Ort 3 befindet sich hier auf einer Flaeche 5, die durch ein Foerderband 6 definiert ist. Der zweite Ort 4 befindet sich hier ebenfalls auf einer Flaeche 7, die durch ein Foerderband 8 definiert ist, von dem aber, wie auch vom Foerderband 6, nur ein Ausschnitt dargestellt ist.

Der Manipulator 1 weist in diesem Beispiel zwei Greifermittel 9 und 10 auf, die hier als Saugelemente ausgebildet sind. Diese Greifermittel 9 und 10 sind Bestandteile eines Mittels zum Ergreifen und Festhalten der Gegenstaende oder kurz eines Greifersystems 11. Die Greifermittel 9 und 10 sind so ausgebildet und im Greifersystem 11 angeordnet, dass sie gegeneinander eine Bewegung ausueben koennen. Man erkennt das aus dieser Darstellung, wenn man davon ausgeht, dass das Greifermittel 9 gerade eine solche Stellung einnimmt, dass der Gegenstand 2b auf dem Foerderband 6 aufliegt, wogegen der Gegenstand 2a mit seinem Greifermittel 10 um einen Weg 12 vom Foerderband entfernt ist. Das Greifersystem 11 ist hier lediglich schematisch und vereinfacht dargestellt, weil verschiedene Ausfuehrungsformen denkbar sind, die, mit diesen und noch nachfolgend angegebenen Vorgaben, durch einen Fachmann angewendet oder entwickelt werden koennen. Hier ist dieses Greifersystem 11 ueber einen Arm 14 um eine Achse 15 drehbar an einem Ausleger 16 angeordnet. Dieser ist wiederum in an sich bekannter Weise um eine weitere Achse 17 drehbar gelagert. Das Greifersystem 11 weist zudem auch je einen Hub- und Drehantrieb 18 und 19 fuer die Greifermittel 9 und 10 auf. Der Ausleger 16 enthaelt auch einen Drehantrieb 20 fuer das Greifersystem 11.

Derselbe Ausleger 16 ist nochmals in einer anderen Stellung als Ausleger 16' mit entsprechendem Greifermittel 11' dargestellt. Man erkennt in dieser Stellung ebenfalls die Gegenstaende 2a' und 2b'. Auf der Flaeche 7 ist eine Projektion 21 der Umrisse des Gegenstandes 2b' dargestellt, der sich in einem Abstand zum Foerderband 8 befindet. Zwischen dieser Stellung und der vorausgehend beschriebenen Stellung hat der Gegenstand 2b beispielsweise einen Weg 22 zurueckgelegt, der im Vergleich zum Weg 12 vergleichsweise gross ist.

Die Position der einzelnen Gegenstaende 2b, 2c wird innerhalb eines vorgegebenen Feldes 23 bestimmt, das beispielsweise durch Begrenzungslinien 24, 25, 26 und 27 begrenzt wird. Dieses Feld 23 kann beispielsweise durch einen Empfaenger 28 erfasst und ueberwacht werden. Solche Empfaenger sind an sich bekannte und im Handel erhaeltliche Elemente, die beispielsweise von einer Strahlungsquelle ausgesendete Strahlen oder auch Wellen empfangen koennen. Dabei ist angenommen, dass diese Strahlen oder Wellen durch die Gegenstaende beeinflusst werden. Ein solcher Empfaenger erkennt beispielsweise einzelne Kanten der Gegenstaende als Linien. Deren Lage in bezug auf die Begrenzungslinien 24 bis 27 durch Abstaende 29 und 30 sowie durch die Orientierung dieser Linien (Winkellage) im Feld 23 kann in einer Auswertungseinheit 31 bestimmt werden, die ueber einen Bus 32 mit dem Empfaenger 28 verbunden ist. Der Empfaenger 28 bildet zusammen mit der Auswertungseinheit 31 ein Mittel zum Erfassen der Position der Gegenstaende. Eine solche Lagebestimmung geschieht in dieser Auswertungseinheit 31 aus einem Bild, das der Empfaenger 28 uebermittelt, wobei dieses Bild aber beispielsweise in digitale Daten umgesetzt ist. Ueber einen Bus 33 ist die Auswertungseinheit 31 auch mit einem Antrieb 34 fuer das Foerderband 6 verbunden. Dies kann dazu dienen, den Antrieb des Foerderbandes zu beeinflussen, sollte die Bestimmung der Position in einem ersten Versuch nicht erfolgreich gewesen sein. Ueber einen Bus 35 ist die Auswertungseinheit 31 auch mit dem Manipulator 1 und dabei auch mit jedem einzelnen der mehreren Antriebe 18, 19, 20 und mit einem Drehantrieb 36 fuer den Ausleger 16 verbunden. Die Auswertungseinheit 31 bildet auch ein Mittel zum Steuern des Manipulators, denn sie gibt die Signale zum Steuern der einzelnen Antriebe als Funktion der erfassten Position ab.

Wie bereits gezeigt, liegen die Positionen der einzelenen Gegenstaende 2b, 2c am ersten Ort 3 auf einer Flaeche 5. Die Greifermittel 9, 10 des Greifersystems 11 sind so angeordnet, dass sie die Gegenstaende von einer Seite 37 der Flaeche 5 herkommend ergreifen koennen. Die Mittel 28, 31 zum Erfassen der Position der Gegenstaende dagegen sind auf der anderen Seite 13 der Flaeche 5 angeordnet und erfassen die Position der Gegenstaende von dieser anderen Seite aus beruehrungslos. Das ist beispielsweise mit einem Empfaenger 28 der zum Empfang von Roentgenstrahlen ausgebildet ist gut moeglich. Aber auch andere Sender-Empfaenger-Systeme, die aufgrund von anderen physikalischen Gesetzen arbeiten, sind anwendbar und deshalb nicht naeher beschrieben. Ebenso kann die Erfassung der Position auf der einen Seite der Flaeche 5 indirekt erfolgen, indem zwischen dem Ort 3 und dem Empfaenger 28 oder dem Sender-Empfaenger Mittel vorgesehen sind, die die ausgesendeten und/oder empfangenen Wellen oder Strahlen spiegeln. Durch diese Anordnung der Mittel zum Erfassen der Gegenstaende auf der einen und der Mittel zum Erfassen der Position der Gegenstaende auf der anderen Seite der Flaeche 5, behindern sich diese Mittel gegenseitig nicht und die Poisition kann damit auch kontinuierlich oder in kleinsten Schritten erfasst werden.

## Patentansprüche

1. Verfahren zum Manipulieren von Gegenständen, die auf einer Fläche (5) an einen ersten Ort (3) herangeführt werden, wobei die Position der Gegenstände am ersten Ort berührungslos erfasst wird, dadurch gekennzeichnet, dass am ersten Ort die Position von bewegten Gegenständen in einem Bereiche (23) auf der Fläche (5) erfasst wird, dass dabei Signale erzeugt werden, die ausschliesslich von einer Seite (13) ausgehen, dass die Gegenstände durch den Manipulator (1) aufgrund der Signale aus der einen Seite (13), im Bereiche (23) auf der anderen Seite (37) ergriffen werden, dass die eine und die andere Seite (13, 37) durch die Fläche (5) voneinander getrennt werden, auf der die Gegenstände liegen, wenn sie erfasst werden und dass die Gegenstände anschliessend an einen zweiten Ort (4) übergeführt werden.

2. Verfahren nach Anspruch 1, dadurch gekennzeichnet, dass die Position kontinuierlich und mindestens teilweise gleichzeitig mit dem Ergreifen erfasst wird.

3. Verfahren nach Anspruch 1, dadurch gekennzeichnet, dass die Position mehrerer Gegenstände nacheinander erfasst und die Gegenstände nacheinander ergriffen werden und dass die mehreren Gegenstände gemeinsam an den zweiten Ort übergeführt werden.

4. Vorrichtung zur Durchführung des Verfahrens nach Anspruch 1, gekennzeichnet durch, Mittel zum Erfassen der Position der bewegten Gegenstände in einem Bereiche (23) und zum Erzeugen von Positionssignalen, welche Mittel auf einer Seite der Fläche angeordnet sind, und durch einen Manipulator mit Greifermitteln (9, 10), der auf der Gegenseite der Fläche angeordnet ist und durch die Positionssignale aus der einen Seite angesteuert ist und den ersten und den zweiten Ort bedienen kann.

5. Vorrichtung nach Anspruch 4, dadurch gekennzeichnet, dass als Mittel ein Empfänger (28) zum kontinuierlichen Erfassen von Signalen, die auf die Gegenstände bezogen sind, vorgesehen ist, und dass Greifermittel (9, 10) zum Ergreifen und Festhalten mehrerer Gegenstände vorgesehen sind.

6. Vorrichtung nach Anspruch 5, dadurch gekennzeichnet, dass als Mittel eine Steuerung (31) zum Erfassen der Position mehrerer Gegenstände und zum Steuern des Manipulators zum Ergreifen der Gegenstände in Serie vorgesehen ist.

7. Vorrichtung nach Anspruch 4, dadurch gekennzeichnet, dass der Manipulator mehrere Greifermittel (9, 10) aufweist, die gegeneinander und unabhängig voneinander Bewegungen ausführen, deren Wege vergleichsweise kurz zum Weg des Manipulators sind.

8. Vorrichtung nach Anspruch 4, dadurch gekennzeichnet, dass das System zum Erfassen der Position der Gegenstaende aus einer Strahlungsquelle (28), aus einem Empfaenger (28) und aus einer Auswertungseinheit (31) besteht.

9. Vorrichtung nach Anspruch 5, wobei die Flaeche (5) durch eine Lager-oder Transporteinrichtung (6) fuer die Gegenstaende bestimmt wird, dadurch gekennzeichnet, dass die Mittel zum Ergreifen auf einer Seite (37) der Lager-oder Transporteinrichtung angeordnet sind und dass die Mittel zum Erfassen der Position auf der anderen Seite (13) der Lager- oder Transporteinrichtung angeordnet sind.

## Claims

1. Method for manipulating articles, which are brought up to a first location (3) on a surface (5), the position of the articles being detected in contactless manner at the first location, characterized in that at the first location the position of the moved articles is detected in an area (23) on the surface (5), that signals are generated which exclusively emanate from one side (13), that as a result of the signals from the one side (13) the articles are detected by the manipulator (1) in the area (23) on the other side (37), that the two sides (13, 17) are separated from one another by the surface (5) on which the articles are located if they are detected and that the articles are subsequently transferred to a second location (4).

2. Method according to claim 1, characterized in that the position is detected continuously and at least partly simultaneously with the gripping.

3. Method according to claim 1, characterized in that the position of several articles is successively detected and the articles are successively gripped and that several articles together are transferred to the second location.

4. Apparatus for performing the method according to claim 1, characterized by means for detecting the position of the moved articles in an area (23) and for generating position signals, said means being located on one side of the surface, and by a manipulator with gripping means (9, 10) located on the opposite side of the surface and controlled by the position signals from one side and able to service the first and second locations.

5. Apparatus according to claim 4, characterized in that the means are constituted by a receiver (28) for the continuous detection of signals, related to the articles and that gripping means (9, 10) are provided for gripping and holding several articles.

6. Apparatus according to claim 5, characterized in that the means are constituted by a control (31) for detecting the position of several articles and for controlling the manipulator for gripping the articles in series.

7. Apparatus according to claim 4, characterized in that the manipulator has several gripping means (9, 10), which perform movements against and independent of one another and whose paths are short compared with that of the manipulator.

8. Apparatus according to claim 4, characterized in that a system for detecting the position of articles comprises a radiation source, a receiver (28) and an evaluating unit (31).

9. Apparatus according to claim 5, in which the surface (5) is determined by a storage or transporting device (6) for the articles, characterized in that the means for gripping are arranged on one side (37) of the storage or transporting device and that the means for detecting the position are located on the other side (13) of the storage or transporting device.

## Revendications

1. Procédé pour manipuler des objets, qui sont amenés sur une surface (5) en un premier lieu (3), la position des objets au premier lieu étant déterminée sans contact, caractérisé en ce qu'au premier lieu, la position des objets déplacés est déterminée dans une zone (23) sur la surface (5), et en ce que des signaux sont alors générés, qui partent exclusivement d'un côté (13), en ce que les objets sont saisis par le manipulateur (1), en raison des signaux provenant du premier côté (13), dans la zone (23) de l'autre côté (37), en ce que l'un et l'autre côtés (13, 37) sont séparés l'un de l'autre par la surface (5) sur laquelle reposent les objets, lorsqu'ils sont saisis, et en ce que les objets sont ensuite transférés vers un deuxième lieu (4).

2. Procédé selon la revendication 1, caractérisé en ce que la position est déterminée en continu et au moins en partie simultanément à la saisie.

3. Procédé selon la revendication 1, caractérisé en ce que la position de plusieurs objets est déterminée successivement et les objets sont saisis successivement, et en ce que lesdits plusieurs objets sont transférés en commun vers le deuxième lieu.

4. Dispositif pour mettre en oeuvre le procédé selon la revendication 1, caractérisé par des moyens destinés à déterminer la position des objets déplacés dans une zone (23) et à générer des signaux de position, lesquels moyens sont disposés sur un côté de la surface, et par un manipulateur muni de moyens de saisie (9, 10) disposé du côté opposé de la surface, qui est piloté par les signaux de position provenant du premier côté et qui peut desservir le premier et le deuxième lieux.

5. Dispositif selon la revendication 4, caractérisé en ce que, comme moyen, un récepteur (28) permettant de déterminer en continu des signaux qui concernent l'objet est prévu, et en ce que des moyens de saisie (9, 10) destinés à saisir et retenir plusieurs objets sont prévus.

6. Dispositif selon la revendication 5, caractérisé en ce que, comme moyen, une commande (31) destinée à déterminer les positions de plusieurs objets et à commander le manipulateur pour saisir les objets est prévue.

7. Dispositif selon la revendication 4, caractérisé en ce que le manipulateur présente plusieurs moyens de saisie (9, 10) qui accomplissent des mouvements opposés et indépendants les uns des autres, dont les trajectoires sont courtes en comparaison de la trajectoire du manipulateur.

8. Dispositif selon la revendication 4, caractérisé en ce que le système servant à déterminer la position des objets se compose d'une source de rayonnement, d'un récepteur (28) et d'une unité d'exploitation (31).

9. Dispositif selon la revendication 5, dans lequel la surface (5) est définie par une installation de stockage ou de transport (6) pour les objets, caractérisé en ce que les moyens de saisie sont disposés sur un côté (37) de l'installation de stockage ou de transport et en ce que les moyens servant à déterminer la position sont disposés de l'autre côté (13) de l'installation de stockage ou de transport.
